# EUROPEAN PATENT APPLICATION

(11) **EP 1 653 097 A1**
(43) Date of publication of application: **03.05.2006**
(21) Application number: 04770897.9
(22) Date of filing: 23.07.2004
(51) Int. Cl.: F16C 29/06, F16C 23/08, F16C 33/58

(54) **LINEAR GUIDE DEVICE WITH OFFSET-LOAD PREVENTION MECHANISM**

(30) Priority: 25.07.2003 JP 2003279887
(71) Applicant: THK CO., LTD., Shinagawa-ku, Tokyo 141-8503 (JP)
(72) Inventor: SUDO, Yuji, c/o THK CO., LTD., Tokyo 1418503 (JP)
(74) Representative: Grünecker, Kinkeldey, Stockmair & Schwanhäusser Anwaltssozietät
(86) International application number: PCT/JP2004/010504
(87) International publication number: WO 2005/010384

(57) **Abstract**

Provided is a linear guide device in which, even when an offset load is applied to rollers rolling in a load rolling path, the offset load can be effectively reduced and the movement of a slider relative to a raceway rail can be smoothened, and wear of the rollers can be prevented as far as possible. In the linear guide device, a bearing race with a load rolling surface on which rollers roll is provided, the slider is provided with a reception groove where the bearing race is fitted at a position opposed to a raceway rail-side rolling surface. The bearing race and the reception groove are formed in a substantially semi-circular cross-sectional configuration in a direction orthogonal to the rolling direction of the rollers. The bearing race is structured so as to be oscillatable in the reception groove, with an outer peripheral surface of the bearing race being in sliding contact with an inner peripheral surface of the reception groove. An oscillation center of the bearing race in the reception groove is positioned between the raceway rail-side rolling surface and the slider-side load rolling surface that are opposed to each other.

## Description

### TECHNICAL FIELD

The present invention relates to a linear guide device in which a raceway rail and a slider are assembled together so as to allow relative reciprocal movement and, in particular, a linear guide device of the type in which a large number of rollers are arranged between a raceway rail and a slider and in which these rollers roll while receiving a load exerted between the raceway rail and the slider.

### BACKGROUND ART

Patent Document 1: JP 58-128526 A
Patent Document 2: JP 62-024646 A

Conventionally, a linear guide device of this type is composed of a raceway rail installed on a stationary portion, such as a bed or a column, and a slider assembled to the raceway rail through the intermediation of a large number of rolling members, such as balls or rollers, and capable of freely reciprocating along the raceway rail. On the raceway rail, there is formed a rolling surface for the rolling members, whereas, on the slider, there is formed a load rolling surface opposed to the rolling surface of the raceway rail. As a result of the rolling surface of the raceway rail and the load rolling surface of the slider being opposed to each other, there is formed a load rolling path for the rolling members. In this load rolling path, there are arranged the rolling members in a row, and the rolling members roll while receiving a load between the raceway rail and the slider, whereby the slider can freely move along the raceway rail with a very small resistance.

The load rolling path exists between the raceway rail and the slider not in a single line but in a plurality of lines, such as two or four. Thus, the direction in which the rolling members and the rolling surface of the raceway rail are held in contact with each other, and the direction in which the rolling members are held in contact with the load rolling surface of the slider differ from load rolling path to load rolling path, and the slider can receive a load in every direction exerted in a plane orthogonal to the longitudinal direction of the raceway rail. For example, in a linear guide device equipped with four load rolling paths, the direction in which the rolling members are held in contact with the load rolling surface in each load rolling path is inclined by 45 degrees with respect to the horizontal direction, making it possible to uniformly receive loads applied from four directions of the radial direction, reverse radial direction, and horizontal directions.

As stated above, in a linear guide device of this type, the raceway rail is arranged on a stationary portion, such as a bed, whereas the slider is mounted to a movable member, such as a worktable. It should be noted, however, that, depending upon the accuracy with which the raceway rail is mounted to the stationary portion, and the accuracy with which the slider is mounted to the movable member, the slider running on the raceway rail is inclined with respect to the raceway rail, with the result that the rolling surface on the raceway rail side and the load rolling surface on the slider side cease to be right opposite to each other. When the rolling members are balls, the balls are in point contact or minute-area plane contact with the rolling surface of the raceway rail and the load rolling surface of the slider, so if the load rolling surface is slightly displaced with respect to the rolling surface on the raceway rail side due to the incline of the slider, the balls are displaced on the rolling surface, so the mounting error of the raceway rail and the slider can be absorbed relatively easily. However, when the rolling members are rollers, the rollers are in line contact with the rolling surface of the raceway rail and the load rolling surface of the slider, so it is rather difficult to absorb the mounting error of the raceway rail and the slider, and an uneven load, that is, an offset load, is likely to be applied to each roller along the direction of the rotation axis thereof. When an offset load is applied to a roller, there is likely to be generated skew, which disturbs the aligned state of the rollers in the load rolling path, and there is a fear of the smooth movement of the slider with respect to the raceway rail being hindered; for example, the rollers may be engaged with each other to be locked within the load rolling path. Further, due to the offset load, offset wear is generated on the rollers, so, as compared with the case in which no offset load is applied, the possibility of premature wear of the rollers is higher.

In view of this, in a linear guide device using rollers as the rolling members, slight crowning is effected on both ends in the rotation axis direction of the rollers, thereby making it possible to mitigate the offset load applied to the rollers even if there exists a slight mounting error in the mounting of the raceway rail and the slider. However, the adjustment of the crowning amount is rather difficult, and takes time and effort, resulting in high production cost.

JP 58-128526 A discloses a linear guide device having such a structure that a bearing race with a roller load rolling surface is attached to the slider and that the bearing race is displaced with respect to the slider according to the direction of the load applied to the rollers. The bearing race is formed in a cylindrical configuration, and is fit-engaged with the slider, with the axial direction thereof being matched with the roller rolling direction. The rollers roll while receiving a load between the bearing race and the raceway rail. Due to the formation of the bearing race in a cylindrical configuration, when an offset load is applied to the rollers, the bearing race is slightly displaced in the circumferential direction thereof, and an effect of reducing the offset load applied to the rollers is to be expected.

However, since the rotation center of the bearing race is provided independently of the rollers rolling on the load rolling surface, there may be generated, depending upon the direction in which the load is applied to the slider, a moment load causing the bearing race to be displaced in the circumferential direction thereof is generated although the accuracy with which the raceway rail is mounted to the stationary portion and the accuracy with which the slider is mounted to the movable member are high, with the result that an offset load is applied to the rollers.

JP 62-024646 A discloses a linear guide device in which there are formed two lines of roller load rolling surfaces on a cylindrical bearing race fit-engaged with a slider and in which, as in the linear guide device disclosed in JP 58-128526 A, the bearing race rotates slightly in the circumferential direction with respect to the slider according to the direction in which the load is applied to the rollers. However, the two lines of load rolling surfaces formed on the bearing race are in directions different from each other, so the offset load applied to the rollers on one load rolling surface and the offset load applied to the rollers on the other load rolling surface are different from each other. Thus, if the bearing race would be displaced in the circumferential direction according to the offset load applied to the rollers in one line, it is constrained by the offset load applied to the rollers in the other line, so it is impossible to sufficiently reduce the offset load applied to each roller.

### DISCLOSURE OF THE INVENTION

### PROBLEMS TO BE SOLVED BY THE INVENTION

The present invention has been made in view of the above-mentioned problems. It is an object of the present invention to provide a linear guide device in which, even when an offset load is applied to the rollers rolling in the load rolling path, it is possible to effectively reduce the offset load, making it possible to smoothen the movement of the slider with respect to the raceway rail, and in which it is possible to prevent wear of the rollers as far as possible.

### MEANS FOR SOLVING THE PROBLEMS

The present invention is applicable to a linear guide device in which a slider is assembled to a raceway rail through the intermediation of a large number of rollers and in which the slider moves reciprocally along the raceway rail. On the raceway rail, there is formed a roller rolling surface along the longitudinal direction thereof, whereas, on the slider, there is formed a load rolling surface opposed to the rolling surface on the raceway rail side. The rollers roll within a load rolling path formed by the rolling surface and the load rolling surface while receiving a load. The load rolling surface is formed on a bearing race, and the slider has a reception groove to be fit-engaged with the bearing race. The bearing race is formed in a substantially semi-circular cross-section in the direction orthogonal to the rolling direction of the rollers, and the reception groove is formed in the same configuration. With this construction, the bearing race oscillates within the reception groove, and the outer peripheral surface of the bearing race is in sliding contact with the inner peripheral surface of the reception groove. The center of the oscillation of the bearing race within the reception groove is positioned between the raceway rail-side rolling surface and the slider-side load rolling surface that are opposed to each other.

In the linear guide device of the present invention, constructed as described above, the number of raceway rails may be selected as appropriate according to the load of the slider, etc.; it may be, for example, two or four, as long as they extend in the longitudinal direction and have a plurality of roller rolling surfaces. Further, also regarding the arrangement of those roller rolling surfaces with respect to the raceway rail, design change may be effected as appropriate according to the load bearing capacity imparted to the slider. For example, they may be formed exclusively on both side surfaces of the raceway rail formed in a substantially rectangular cross-sectional configuration, or on the upper surface and both side surfaces of the raceway rail.

Regarding the slider, its configuration allows arbitrary design change according to the use, etc. as long as it can be assembled to the raceway rail through the intermediation of the rollers. Further, the slider may be of the type which is equipped with an endless circulation path for the rollers, circulating the rollers from one end of the load rolling path to the other end thereof, or of the type in which the rollers are reciprocated exclusively within the load rolling path without being circulated.

Further, regarding the rollers, their width and diameter allow design change as appropriate according to the use, etc. of the linear guide device. Further, the rollers may fill the load rolling path as they are, rolling while in contact with the adjacent rollers, or may be arranged in a roller cage, filling the load rolling path together with the roller cage.

### BRIEF DESCRIPTION OF THE DRAWINGS

[Fig. 1] A partially cutaway perspective view of a guide device to which the present invention is applied.
[Fig. 2] A longitudinal sectional view of the guide device shown in Fig. 1.
[Fig. 3] A longitudinal sectional view of a construction of a roller endless circulation path in the guide device shown in Fig. 1.
[Fig. 4] A perspective view of a roller cage to be incorporated into the endless circulation path.
[Fig. 5] An enlarged sectional view of an example in which the center of curvature of the bearing race is positioned on the slider side with respect to the load rolling surface.
[Fig. 6] An explanatory view illustrating how an offset load is applied to a roller in the bearing race construction as shown in Fig. 5.
[Fig. 7] An enlarged sectional view of an example in which the center of curvature of the bearing race is positioned on the raceway rail side with respect to the rolling surface.
[Fig. 8] A diagram illustrating how a roller is displaced in the direction of the rotation axis according to the distance between the center of curvature of the bearing race and the center of gravity of the roller.
[Fig. 9] An enlarged sectional view showing an example in which the center of curvature of the bearing race coincides with the center of gravity of the roller.
[Fig. 10] A diagram illustrating how the roller moves when the bearing race is displaced in the construction of Fig. 9.
[Fig. 11] An enlarged sectional view showing an example in which the center of curvature of the bearing race is matched with the rolling surface of the raceway rail.

1: the roller, 2: bearing race, 3: rolling surface, 4: reception groove, 5: load rolling surface, 10: raceway rail, 11: slider, 11a slider main body, 21: load rolling path, Q: center of curvature

### BEST MODE FOR CARRYING OUT THE INVENTION

In the following, a linear guide device with an offset-load prevention mechanism according to the present invention will be described in detail with reference to the accompanying drawings.

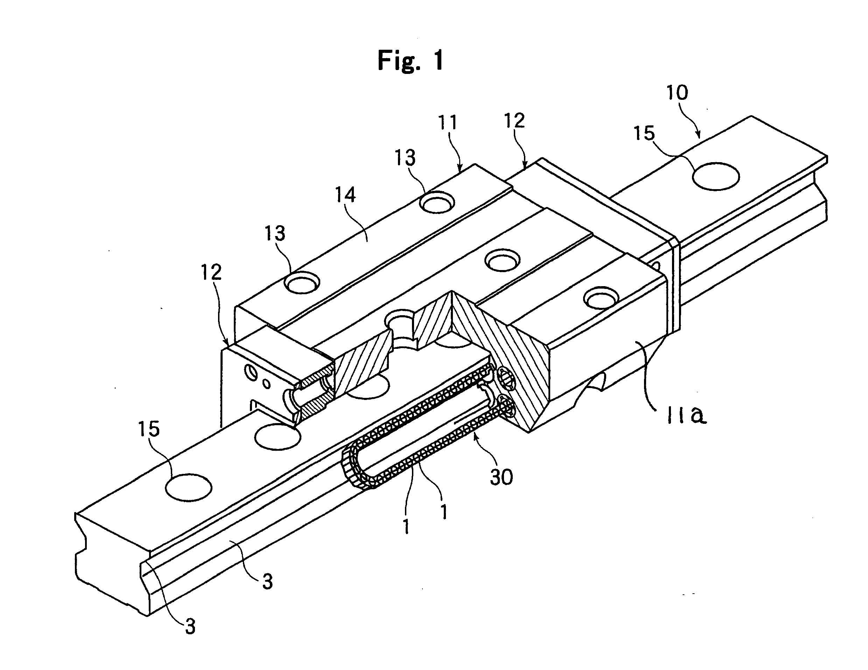

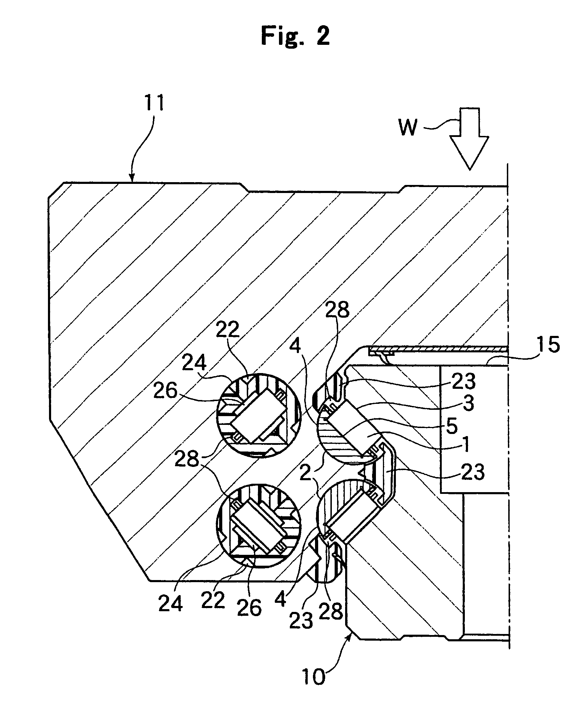

Fig. 1 and Fig. 2 show an embodiment of a linear guide device to which the present invention is applied. This linear guide device is composed of a raceway rail 10 provided on a stationary portion, such as a bed or a column, and a slider 11 assembled to the raceway rail 10 through the intermediation of a large number of rollers 1 and capable of reciprocating on the raceway rail 10.

The raceway rail 10 is formed in a substantially rectangular cross-section orthogonal to the longitudinal direction thereof, and each side surface thereof has two longitudinal roller rolling surfaces 3, that is, four in total. The two rolling surfaces 3 formed on each side surface of the raceway rail 10 is directed upwards or downwards by 45 degrees with respect to the horizontal direction, with the normals of the rolling surfaces crossing each other. Further, bolt mounting holes 15 are formed at predetermined longitudinal intervals in the raceway rail 10. Bolts inserted into those bolt mounting holes are fastened to the stationary portion, whereby the raceway rail can be firmly fixed to the stationary portion.

The slider 11 is formed in a channel-like configuration with a guide groove to be fit-engaged with the upper portion of the raceway rail 10 through the intermediation of a gap, and is composed of a metal slider main body 11a, and a pair of end plates 12 fixed to the ends of the slider main body 11a. The upper surface of the slider main body 11a constitutes a mounting surface 14 for a movable member, such as a table, and the mounting surface 14 has tap holes 13. Thus, by fastening bolts to the tap holes 13, the movable member can be fixed to the slider 11.

The slider main body 11a has reception grooves 4 at positions opposed to the rolling surfaces 3 of the raceway rail 10, and a bar-like bearing race 2 is fit-engaged with each reception groove 4. Formed on the bearing races 2 are load rolling surfaces 5 opposed to the rolling surfaces 3 of the raceway rail 10, and load rolling paths 21 for the rollers 1 are formed by the rolling surfaces 3 and the load rolling surfaces 5. Each roller 1 is in contact with the rolling surface 3 of the raceway rail 10 and the load rolling surface 5 of the bearing race 2, and rolls within the load rolling path 21 while receiving the load applied to the slider 11 from the movable member.

The slider main body 11a has circular roller return holes 22 in correspondence with the load rolling paths 21, respectively, and cage retaining members 24 of synthetic resin are inserted into the roller return holes 22, aligning the rollers 1 rolling in a non-load state within the roller return holes 22.

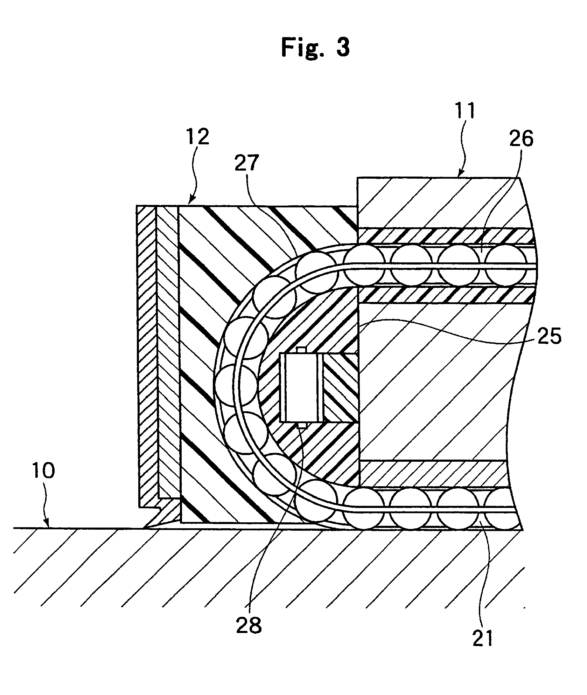

Further, as shown in Fig. 3, each of the cover members 12 has a direction changing path 27 connecting one end of the load rolling path 21 and one end of the roller return hole 22. By fixing the pair of cover members 12 to each of the end surfaces of the slider main body 11a, there is formed an endless circulation path for the rollers 1. Inside the load rolling path 21, the rollers 1 roll while receiving the load applied to the slider 11, and at an end of the load rolling path 21, they are released from the load to enter the direction changing path 27 in a non-load state. Then, they roll within the roller return hole 22 in the non-load state to circulate to the other end of the load rolling path 21 by way of the direction changing path 27 on the opposite side.

Since the respective normals of the two rolling surfaces 3 formed on each side surface of the raceway rail 10 cross each other at an angle of 90 degrees, the direction changing paths 27 corresponding to these rolling surfaces 3 cross each other within the cover member 12. That is, as shown in Fig. 2, the rollers 1 that have rolled on the upper one of the upper and lower two rolling surfaces 3, 3 formed on each side surface of the raceway rail 10 are guided to the lower roller return hole 22 by the direction changing path 27, and the rollers 1 that have rolled on the lower rolling surface 3 are guided to the upper roller return hole 22. As shown in Fig. 3, in order that the direction changing paths 27 thus crossing each other within the cover member 12 may not interfere with each other, one of the pair of direction changing paths 27, 27 crossing each other is formed in an arc larger than the other, with the other direction changing path extending through the inner side of the arc.

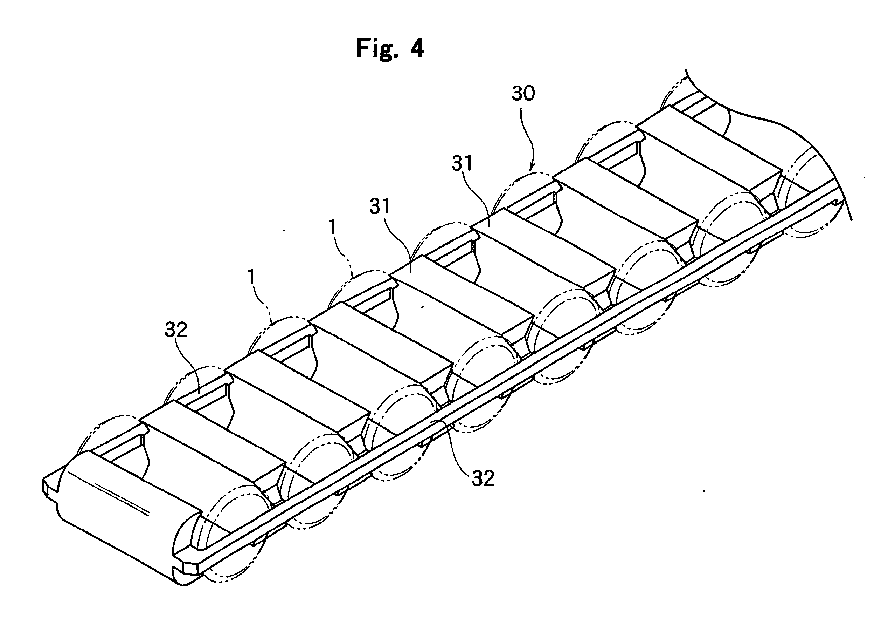

On the other hand, the rollers 1 are not arranged within the endless circulation path as they are, but are arranged in a row at predetermined intervals in a roller cage 30 of synthetic resin to be incorporated into the endless circulation path together with the roller cage 30. As shown in Fig. 4, the roller cage 30 is formed in a belt-like configuration by connecting a plurality of spacers 31 with each other by a connecting portion 32, with each spacer 31 having a curved-surface seat for holding a roller 1. That is, each roller 1 is retained rotatably and in a predetermined attitude by a pair of spacers 31 longitudinally adjacent to each other, thus preventing generation of skew in the endless circulation path.

The roller cage 30 circulates within the endless circulation path together with the rollers 1. In order to prevent twisting and meandering of the roller cage 30 during circulation, the endless circulation path of the roller 1 is equipped with a cage retaining member extending over its entire length. That is, the cage retaining members 24 of synthetic resin are inserted into the roller return holes 22, and on the other hand, a cage retaining member 23 is attached to either side of the load rolling path. Further, a cage retaining member 25 is fit-engaged with the cover member. Formed in those cage retainingmembers are guide grooves 28, into which the connecting portion 32 of the roller cage 30 is inserted, with the guide grooves 28 formed in the cage retaining members 23, 24, and 25 being continuous with each other along the endless circulation path. Thus, the roller cage 30 is guided by the guide grooves 28 to circulate within the endless circulation path in a fixed raceway, whereby the circulation of the rollers 1 within the slider 11 is smoothened.

As shown in Fig. 2, the bearing race 2 is formed in a substantially semi-circular cross-section in the direction orthogonal to the longitudinal direction, and has the load rolling surface 5 on the flat portion continuous along the longitudinal direction. Further, the reception groove 4 of the slider main body 11a to be fit-engaged with the bearing race 2 is formed substantially in the same sectional configuration, and the outer peripheral surface of the bearing race 2 is in sliding contact with the inner peripheral surface of the reception groove 4, whereby the bearing race 2 can slightly oscillate in the circumferential direction within the reception groove 4.

In the linear guide device of this embodiment, constructed as described above, the rollers 1 situated within the load rolling path 21 roll while receiving the load exerted between the slider 11 and the raceway rail 10, whereby the slider 11, to which the movable member is mounted, can freely reciprocate over the stationary portion along the raceway rail 10.

Depending upon the mounting accuracy of the raceway rail 10 with respect to the stationary portion, or the mounting accuracy of the slider 11 with respect to the movable member 11, the distance between the rolling surface 3 on the raceway rail 10 side and the load rolling surface 5 on the slider 11 side is not uniform along the rotation axis direction of the rollers 1, and an offset load is applied to each roller 1 rolling on the load rolling surface 5, which leads to skew of the rollers 1 in the load rolling path 21 and offset wear of the rollers 1. However, in the linear guide device of this embodiment, when an offset load is applied to the rollers 1, the bearing race 2 having the load rolling surface 5 oscillates slightly within the reception groove 4 of the slider main body 11a, whereby it is possible to reduce the offset load applied to the rollers 1.

On the other hand, in this linear guide device, the rolling surfaces 3 for the rollers 1 formed on the raceway rail 10 are inclined upwards or downwards by 45 degrees with respect to the mounting surface for the stationary portion. When, for example, a radial load W as shown in Fig. 2 is applied to the slider 11, the direction in which the load is applied to each roller 1 does not coincide with the direction of the normal of the rolling surface 3. Thus, when a load is applied to the slider 11 from a direction that does not coincide with the direction of the normal of the rolling surface 3 of the raceway rail 10, there can be applied, depending upon the configuration of the bearing race 2, a moment load causing the bearing race 2 to be displaced within the reception groove 4. When such a moment load is generated, the bearing race 2 is displaced within the reception groove 4, and an offset load is applied to the rollers 1 although the mounting accuracy of the raceway rail 10 with respect to the stationary portion and the mounting accuracy of the slider 11 with respect to the movable member are sufficiently high.

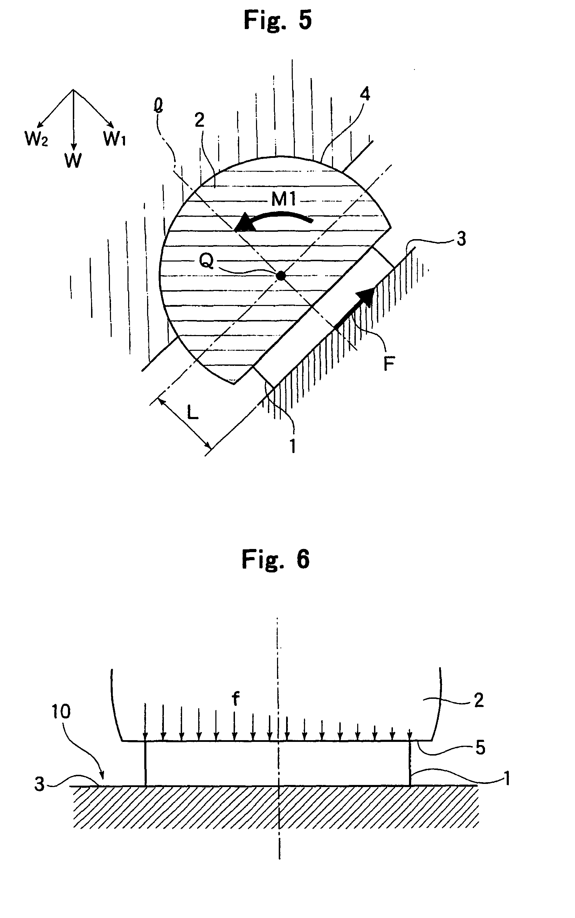

Suppose, for example, as shown in Fig. 5, a center of curvature Q of the outer peripheral surface of the bearing race 2 is situated on the slider main body 110a side with respect to the load rolling surface 5. Assuming that a downward radial load W is applied to the bearing race 2 from the slider main body 110a, such load W is the resultant force of a component of force W1 perpendicular to the rolling surface 3 of the raceway rail 10 and a component of force W2 parallel to the rolling surface 3. Thus, if the bearing race 2 and the roller 1 are regarded as one rigid body, there is applied to the bearing race 2 a reaction force F that keeps the roller 1 on the rolling surface 3 of the raceway rail 10 against the component of force W2. When the center of curvature Q of the outer peripheral surface of the bearing race 2 is situated on the slider main body 110a side with respect to the load rolling surface 5, this reaction force F generates a counterclockwise moment M1 (as seen in the figure) that acts on the bearing race 2, and due to this moment load M1, the bearing race 2 is slightly displaced within the reception groove 4.

When such moment load M1 acts on the bearing race 2 and, as a result, the bearing race 2 is displaced within the reception groove 4, a load f applied to the roller 1 becomes, as shown in Fig. 6, an offset load, which is greater on one side (the left-hand side of Fig. 6) of the roller 1 than on the other side thereof. The larger the moment load M1, that is, the larger a distance L between the center of curvature Q of the bearing race 2 and the load rolling surface 5, the more conspicuous is this offset load.

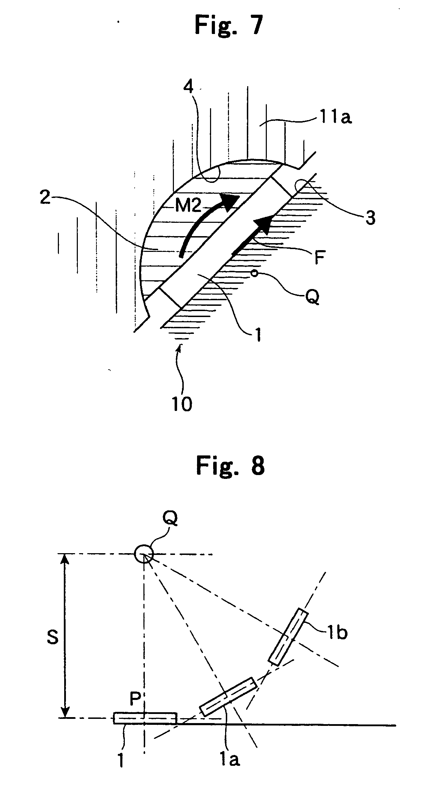

On the other hand, when, as shown in Fig. 7, the center of curvature Q of the outer peripheral surface of the bearing race 2 is situated on the raceway rail 10 side with respect to the rolling surface 3, the above-mentioned reaction force F generates, contrary to the case of Fig. 5, a clockwise moment load M2 (as seen in the figure) that acts on the bearing race 2, and due to this moment load M2, the bearing race 2 is displaced slightly within the reception groove 4. When such moment load M2 acts on the bearing race 2 and, as a result, the bearing race 2 is displaced within the reception groove 4, the load applied to the roller 1 becomes, as in the above-described case, an offset load, which is greater on one side of the roller 1 than on the other side thereof.

When a distance S between the center of curvature Q of the outer peripheral surface of the bearing race 2 and a center of gravity P of the roller 1 is large, there is applied to the roller 1, rolling on the load rolling surface 5, a force that wouldmove it in a direction orthogonal to the rolling direction when the bearing race 2 is displaced within the reception groove 4 by the moment load M1 or M2. That is, as shown in Fig. 8, when the bearing race 2 would be displaced in the circumferential direction of the outer peripheral surface thereof within the reception groove 4, the roller 1, rolling on the load rolling surface 5, would also be displaced so as to draw an arc with a radius S having the point Q at its center, to positions indicated by numerals 1a and 1b. It should be noted, however, that, while it is receiving a load between the rolling surface 3 of the raceway rail 10 and the load rolling surface 5 of the bearing race 2, it is difficult for the roller 1 to move in the direction of the rotation axis, so there is the possibility of the slider 11 being displaced as the bearing race 2 is displaced, and, even if the mounting accuracy of the raceway rail 10 with respect to the stationary portion and the mounting accuracy of the slider 11 with respect to the movable member are sufficiently enhanced, there is a fear of the slider 11 being displaced with respect to the raceway rail 10 to impair the movement accuracy of the movable member.

In view of this, in the linear guide device of this embodiment, the center of curvature Q of the outer peripheral surface of the bearing race 2 is set between the load rolling surface 5 formed on the bearing race 2 and the rolling surface 3 formed on the raceway rail 10. That is, the center of curvature Q is situated within the load rolling path 21, in which the roller 1 rolls.

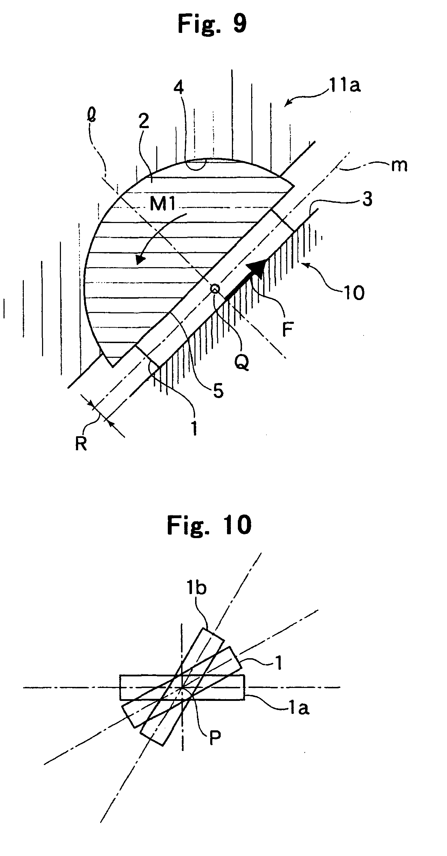

Fig. 9 shows an example in which the center of curvature Q of the bearing race 2 coincides with the center of gravity P of the roller 1 within the load rolling path 21. When the center of curvature Q of the bearing race 2 is thus set, the distance between the reaction force F that would keep the roller 1 on the load rolling surface 5 and the center of curvature Q of the bearing race 2 is equal to the radius R of the roller 1, so it is possible to diminish the moment load M1 generated due to the reaction force F. In particular, when a roller 1 with a small diameter like a needle roller is used as the rolling member, it is possible to diminish the moment load M1 as far as possible. As a result, it is possible to prevent, as far as possible, an offset load from being applied to the roller 1.

When the center of curvature of the bearing race 2 thus coincides with the center of gravity P of the roller 1, that is, the point of intersection of a rotation center m of the roller 1 during rolling and a longitudinal bisector 1 of the roller 1, even if the bearing race 2 is displaced within the reception groove 4 by the moment load M1, the roller 1 only makes an attempt to rotate around its own center of gravity P as shown in Fig. 10, so there is no fear of the slider 11 being displaced as the bearing race 2 is displaced. Thus, if the bearing race 2 is displaced within the reception groove 4 to remove the offset load applied to the roller 1, the movement accuracy of the movable member mounted to the slider 11 is not impaired.

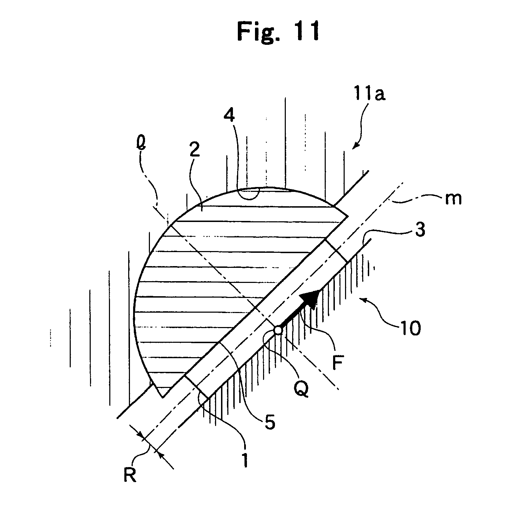

Next, Fig. 11 shows an example in which the center of curvature Q of the bearing race 2 is matched with the rolling surface 3 for the roller 1 formed on the raceway rail 10. When the center of curvature Q of the bearing race 2 is thus set, the reaction force F that would keep the roller 1 on the load rolling surface 5 acts directly on the center of curvature Q of the bearing race 2, so there is generated no moment load that would rotate the bearing race 2 within the reception groove 4. Thus, it is possible to prevent substantially completely an offset load from being applied to the roller 1.

Further, no moment load due to the reaction force F acts on the bearing race 2, so when the mounting accuracy of the raceway rail 10 with respect to the stationary portion and the mounting accuracy of the slider 11 with respect to the movable member are high, there is no fear of the bearing race 2 being displaced within the reception groove 4, nor is there generated any force that would displace the roller 1 in the rotation axis direction, so the movement attitude of the slider 11 with respect to the raceway rail 10 is not impaired, nor is the movement accuracy of the movable member mounted to the slider 11 impaired.

In this way, in the linear guide device of the present invention, the center of curvature of the outer peripheral surface of the bearing race 2 is positioned between the load rolling surface 5 of the bearing race 2 and the rolling surface 3 of the raceway rail 10, whereby, if an offset load is applied to the rollers 1 rolling in the load rolling path 21, it is possible to effectively reduce such offset load, and to smoothen the movement of the slider 11 with respect to the raceway rail 10 and prevent wear of the rollers 1 as far as possible.

## Claims

1. A liner guide device comprising: a raceway rail on which a roller rolling surface is formed to extend in a longitudinal direction of the raceway rail; a slider having a load rolling surface opposed to the rolling surface; and a plurality of rollers that roll within a load rolling path formed by the rolling surface on the raceway rail side and the load rolling surface on the slider side while receiving a load, the slider being capable of reciprocating on the raceway rail, **characterized in that**:
the load rolling surface is formed on a bearing race, and the slider has a reception groove to be fit-engaged with the bearing race at a position opposed to the rolling surface on the raceway rail side;
the bearing race and the reception groove are formed in a substantially semi-circular cross-sectional configuration in a direction orthogonal to the rolling direction of the rollers, the bearing race being structured so that the bearing race is oscillatable in the reception groove, with an outer peripheral surface of the bearing race being in sliding contact with an inner peripheral surface of the reception groove; and
an oscillation center of the bearing race in the reception groove is positioned between the raceway rail-side rolling surface and the slider-side load rolling surface that are opposed to each other.

2. A linear guide device according to Claim 1, **characterized in that** the oscillation center of the bearing race in the reception groove of the slider is positioned on the raceway rail-side rolling surface.

3. A linear guide device according to Claim 1, **characterized in that** the oscillation center of the bearing race in the reception groove of the slider coincides with a center of gravity of each of the rollers rolling on the raceway rail-side rolling surface.

4. A linear guide device according to any one of Claims 1 through 3, **characterized in that** two lines of rolling surfaces are formed on each side surface of the raceway rail to extend in the longitudinal direction of the raceway rail, and normals of the two lines of rolling surfaces formed on each side surface cross each other.
